# FASCICULE DE BREVET EUROPEEN

(11) **EP 0 805 092 B1**
(45) Date de publication et mention de la délivrance du brevet: **29.12.1999**
(21) Numéro de dépôt: 97400956.5
(22) Date de dépôt: 28.04.1997
(51) Int. Cl.: B62D 1/19

(54) **Dispositif de rétroaction actif, lors d'un choc, d'une colonne de direction de véhicule automobile**
Bei einem Stoss aktive Rückzugeinrichtung einer Kraftfahrzeug-Lenksäule
Active retraction device of a motor vehicle steering column during a shock

(30) Priorité: 03.05.1996 FR 9605676
(43) Date de publication de la demande: 05.11.1997
(73) Titulaire: LEMFORDER NACAM S.A., 41100 Vendome (FR)
(72) Inventeur: Duval, Benoît, 41100 Vendome (FR); Gentet, Frédéric, 44100 Vendome (FR); Millet, Pascal, 41100 Meslay (FR)
(74) Mandataire: Martinet & Lapoux

(56) Documents cités:
- EP-A- 0 529 769
- EP-A- 0 611 690

## Description

La présente invention se rapporte à un dispositif de rétraction actif, lors d'un choc, d'une colonne de direction de véhicule automobile, tel que défini dans le préambule de la revendication 1 et connu par exemple de EP-A-0611690.

L'installation d'une colonne de direction de véhicule automobile à l'intérieur de l'habitacle, doit répondre à des critères ergonomiques. Les exigences de plus en plus sévères de protection du conducteur en cas d'accident, et notamment en cas de choc frontal, ont amené les constructeurs à prévoir un système à coussin d'air de sécurité, plus communément appelé "air-bag", qui se gonfle presque instantanément lors d'un choc, afin de protéger le conducteur en recouvrant le volant. Afin que ce système agisse dans les meilleurs conditions, il est nécessaire que le volant se rétracte d'une certaine distance pour permettre à l'air-bag de se déployer correctement sans agression pour le conducteur du véhicule.

Le but de la présente invention est de proposer un dispositif de rétraction actif, en cas de choc, d'une colonne de direction de véhicule automobile, qui agisse de manière à ce que le volant se rétracte d'une certaine distance pour permettre à l'air-bag de fonctionner dans des conditions optimales.

Selon l'invention, le dispositif de rétraction actif, lors d'un choc, d'une colonne de direction de véhicule automobile comporte un arbre de direction qui est monté libre en rotation dans un tube-corps au moyen de roulements. Un carré de renfort solidaire dudit tube-corps est monté sur un élément support fixé au châssis du véhicule. Le carré de renfort est bloqué à la position voulue par un système de réglage. Le dispositif de rétraction actif selon l'invention comprend deux cales à pente qui sont montées sur un axe du système de réglage. Les cales à pente ont des inclinaisons conjuguées par rapport à l'axe de réglage, et sont raccordées par au moins une goupille fusible. La cale interne à pente est agencée autour d'une glissière de réglage en profondeur de la colonne de direction, et la cale externe à pente est solidaire de l'axe de réglage ; de manière qu'en cas de choc, la goupille fusible soit cisaillée par le déclenchement d'un air-bag et permette aux cales à pente de s'écarter l'une de l'autre et de supprimer la tension de l'axe de système de réglage afin d'autoriser l'arbre de direction à se déplacer dans la direction demandée.

Avantageusement, le dispositif de rétraction actif selon l'invention comporte un système à crémaillère qui permet le maintien en position du réglage de profondeur. Le système à crémaillère est constitué par une crémaillère solidarisée au carré de renfort du tube-corps. Cette crémaillère est agencée autour de la glissière de réglage en profondeur, et coopère avec une crémaillère solidaire de la cale interne à pente.

Dans une réalisation particulièrement intéressante de l'invention, la crémaillère du carré de renfort comporte une glissière de réglage en profondeur débouchante, et deux portions de crémaillère entourant ladite glissière. La cale interne comporte une glissière de réglage en profondeur débouchante, et deux portions de crémaillère entourant ladite glissière. De plus, la crémaillère du carré de renfort comporte une butée fixée à son extrémité.

Le dispositif de rétraction actif selon l'invention peut également intégrer un système antirotation qui consiste en un croisillon monté sur l'axe du système de réglage. Ce croisillon est muni sur l'une de ces faces d'un tenon interne coulissant dans la glissière de réglage en profondeur, et sur l'autre face d'un tenon externe coulissant dans la glissière du réglage en hauteur.

Selon l'invention, le dispositif de rétraction actif a une architecture qui est caractérisée en ce que l'axe du système de réglage est constitué par une vis montée de part en part à travers le carré de renfort. A l'extérieur de l'élément support, le blocage du système de réglage se fait par une came au moyen de la poignée de manoeuvre. La crémaillère de carré de renfort, la crémaillère solidaire de la cale interne à pente, et la cale externe à pente solidaire de la vis sont disposées à l'extérieur dudit carré de renfort.

Dans une autre architecture du dispositif de rétraction selon l'invention, l'axe du système de réglage est constitué par une vis, qui est montée sur l'une des parois du carré de renfort. Dans cette architecture, le blocage par une came au moyen de la poignée de manoeuvre se fait à l'extérieur de l'élément support. Le croisillon est disposé entre l'élément support et le carré de renfort. A l'intérieur du carré de renfort sont montées la crémaillère fixée audit carré de renfort, la crémaillère solidaire de la cale interne à pente, et la cale externe à pente solidaire de la vis.

Le dispositif de rétraction actif en cas de choc d'une colonne de direction de véhicule automobile selon l'invention, présente ainsi l'avantage de permettre la rétraction immédiate pour permettre à l'air-bag de se déployer correctement sans agression pour le conducteur du véhicule. Enfin le dispositif de l'invention peut s'adapter et se monter très facilement dans de nouvelles architectures ou dans des architectures existantes de colonnes de direction de véhicule automobile.

D'autres caractéristiques et avantages de l'invention ressortiront de la description qui va suivre, donnée à titre d'exemples nullement limitatifs, en référence aux dessins annexés sur lesquels :
- la figure 1 est une vue dans le sens axial du dispositif de rétraction actif lors d'un choc d'une colonne de direction de véhicule automobile selon l'invention ;
- la figure 2 est une vue suivant un plan perpendiculaire à celui de la figure 1, dans laquelle une coupe axiale partielle a été réalisée ;
- la figure 2A est une vue partielle de la figure 2 ;
- la figure 3 est une vue en perspective de la crémaillère fixée au carré de renfort suivant l'invention ;
- la figure 4 est une vue en perspective de la crémaillère fixée à la cale interne à pente ;
- la figure 5 est une vue en perspective du croisillon selon l'invention ;
- la figure 6 est une vue en perspective de la cale externe à pente ;
- la figure 7 est une vue dans le sens axial d'une colonne de direction selon l'invention, en utilisation normale sans choc ;
- la figure 8 est une vue analogue à la figure 7 après un choc et rétraction de la colonne de direction ; et
- la figure 9 est une vue du dispositif des figures 7 et 8 dans un plan perpendiculaire à ces figures et avec une coupe partielle.

Comme on peut le voir sur les différentes figures de l'ensemble du dispositif de rétraction active selon l'invention, la colonne de direction de véhicule automobile comporte un arbre de direction 1 qui est monté libre en rotation dans un tube-corps 2. Le tube-corps 2 est disposé dans un élément support 4, qui est solidaire du châssis du véhicule automobile. L'arbre de direction 1 est monté dans le tube-corps 2 à l'aide de deux roulements 9. Le tube-corps 2 est réglable en hauteur et en profondeur dans le plan vertical, et est bloqué dans l'élément support 4 par un système de réglage 5 en position de ladite colonne de direction.

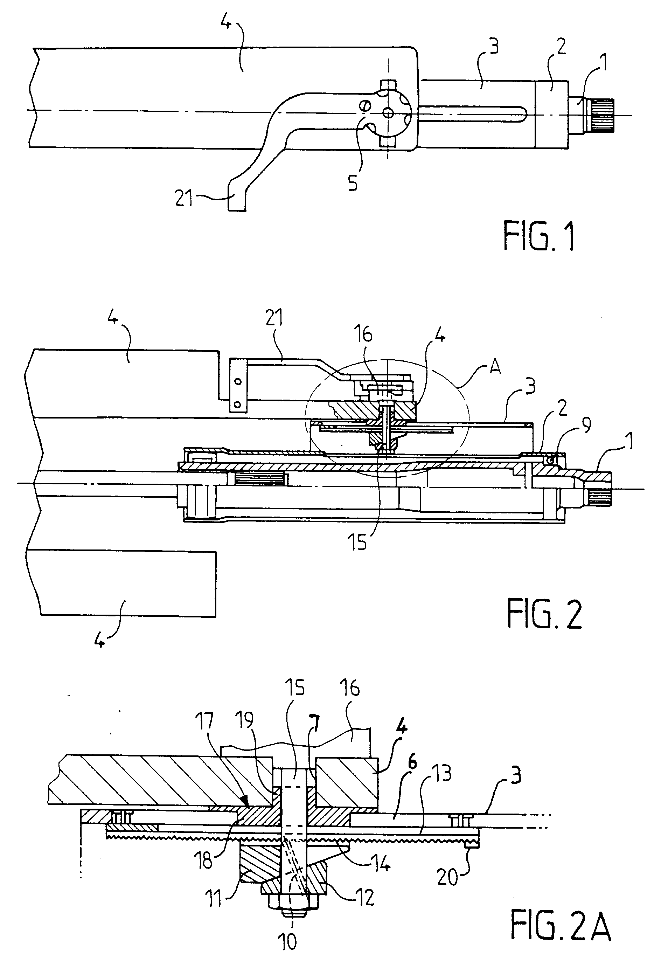

Comme on peut le voir sur les différentes figures 1 à 6, le dispositif de rétraction actif, lors d'un choc, d'une colonne de direction de véhicule automobile selon l'invention, comprend une cale à pente interne 11 et une cale à pente externe 12 qui sont montées sur l'axe du système de réglage 5. La cale interne à pente 11 et la cale externe à pente 12 ont des inclinaisons conjuguées par rapport à l'axe du système de réglage. La cale interne à pente 11 et la cale externe à pente 12 sont raccordées par deux goupilles fusibles 10. La cale interne à pente 11 est agencée autour d'une glissière de réglage en profondeur 6 ménagée dans un carré de renfort 3, et la cale externe à pente 12 est solidaire de l'axe de réglage 5.

En cas de choc, les goupilles fusibles 10 sont cisaillées, ce qui permet aux cales interne 11 et externe 12 à pente de s'écarter l'une de l'autre, et de supprimer la tension de l'axe du système de réglage 5, afin d'autoriser l'arbre de direction à se déplacer dans la direction demandée pour un fonctionnement de l'air-bag à des conditions optimales.

Le dispositif de rétraction actif représenté sur les figures 1 à 6 est caractérisé en ce que l'axe du système de réglage 5 est constitué par une vis 15, qui est montée sur l'une des parois du carré de renfort 3 solidaire du tube-corps 2. Dans cette réalisation, le dispositif de réaction actif comporte de plus un système à crémaillère de maintien à position du réglage en profondeur, et un croisillon 17 d'antirotation du volant.

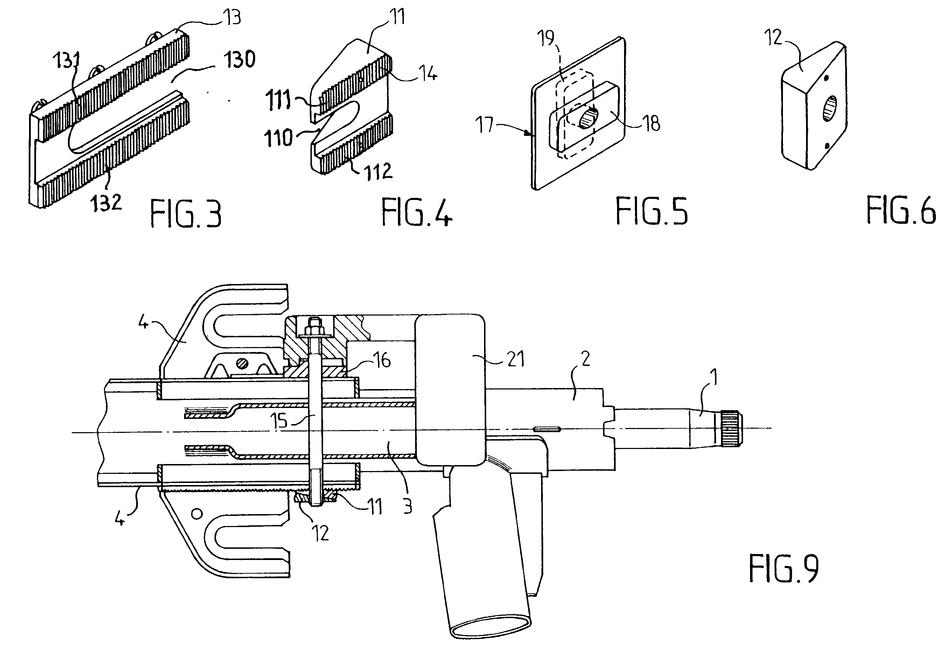

Le système à crémaillère comprend une crémaillère 13 solidarisée au carré de renfort 3 et coopérant avec une crémaillère 14 intégrée à la cale interne à pente 11. Comme on peut le voir sur la figure 3, la crémaillère 13 du carré de renfort 3 comporte deux portions de crémaillère parallèles 131 et 132 et une glissière de réglage en profondeur débouchante 130 entr'elles. Comme on peut le voir sur la figure 4, la cale interne à pente 11 comporte deux portions de crémaillère parallèles 111 et 112 et une glissière de réglage en profondeur débouchante 110 entr'elles. Les portions de crémaillère 131 et 132 coopèrent respectivement avec les portions de crémaillère 111 et 112. De plus, la crémaillère 13 du carré de renfort 3 comporte une butée 20 qui est fixée à son extrémité. La crémaillère 13 est fixée à l'intérieur de la paroi correspondante du carré de renfort 3. Cette crémaillère 13 est agencée autour de la glissière de réglage en profondeur 6 et coopère avec la crémaillère 14 solidaire de la cale interne à pente 11, dont la glissière de réglage en profondeur débouchante 140 permet le passage de la vis 15.

Comme on peut le voir sur la figure 5, le croisillon 17 antirotation du volant est muni sur l'une de ses faces d'un tenon interne 18, et sur l'autre face d'un tenon externe 19. Le croisillon 17 est monté sur la vis 15 et est disposé entre l'élément support 4 et la paroi correspondante du carré de renfort 3, de manière que le tenon interne 18 coulisse dans la glissière de réglage en profondeur 6 et que le tenon externe 19 coulisse dans la glissière de réglage en hauteur 7.

Les figures 4 et 6 montrent en perspective les détails de réalisation des cales interne et externe à pente 11 et 12. Dans la figure 4, la cale interne à pente 11 comporte deux trous destinés à recevoir les goupilles fusibles 10. Dans la figure 6, la cale externe à pente 12 comporte également deux trous destinés à recevoir les goupilles fusibles 10, ainsi qu'un trou de passage de la vis 15.

Le dispositif de rétraction actif selon l'invention représenté sur les figures 1, 2 et 2A est ainsi caractérisé en ce que l'axe du système de réglage 5 est constitué par la vis 15, qui est montée sur l'une des parois du carré de renfort 3. A l'extérieur de l'élément support 4, l'ensemble du système de réglage 5 est bloqué par une came 16 par l'intermédiaire de la poignée de manoeuvre 21. Le croisillon 17 est monté sur la vis 15 et disposé entre l'élément support 4 et la paroi correspondante du carré de renfort 3. Enfin, à l'intérieur de la paroi du carré de renfort 3, la crémaillère 13 est fixée au carré de renfort 3 et coopère avec la crémaillère 14 solidaire de la cale interne à pente 11. La cale interne à pente 11 coopère avec la cale externe à pente 12 qui est solidaire de la vis 15.

Dans la réalisation du dispositif de rétraction actif selon l'invention représenté sur la figure 9, l'axe du système de réglage 5 est constitué par une vis 15, qui est montée de part en part à travers le carré de renfort 3 du tube-corps 2. D'une part et à l'extérieur de l'élément support 4, le blocage se réalise par la came 16 au moyen de la poignée 21 de manoeuvre. D'autre part, la crémaillère 13 est fixée à l'extérieur dudit carré de renfort 3, sur la paroi correspondante de celui-ci et coopère avec la crémaillère 14 intégrée à la cale interne à pente 11. La cale interne à pente 11 coopère avec la cale externe à pente 12 qui est solidaire de la vis 15.

Les goupilles fusibles 10 sont dimensionnées pour tenir correctement en situation normale, et pour se cisailler lors du déclenchement de l'air-bag. En situation normale, l'effort sur le volant est transmis aux goupilles fusibles 10 par l'intermédiaire de l'arbre de direction 1, du roulement supérieur 9, du tube-corps 2 et du carré de renfort 3 avec la crémaillère 13. La crémaillère 13 transmet l'effort à la crémaillère 14 intégrée à la cale interne à pente 11 au moyen des goupilles fusibles 10 pour faire parvenir l'effort à la cale externe à pente 12. L'effort est ensuite transmis à la vis 15, à la came 16, et finalement à l'élément support 4 appartenant au châssis du véhicule. Il n'y a donc pas de rétraction de colonne de direction.

Dans le cas où l'impact de l'air-bag est supérieur à l'effort prédéterminé, il y a rupture des goupilles fusibles 10, ce qui entraîne le glissement de la cale externe à pente 12 par rapport à la cale interne à pente 11 et donc la libération de la tension s'exerçant dans la vis 15, et finalement la libération de la colonne de direction et la rétraction possible du volant.

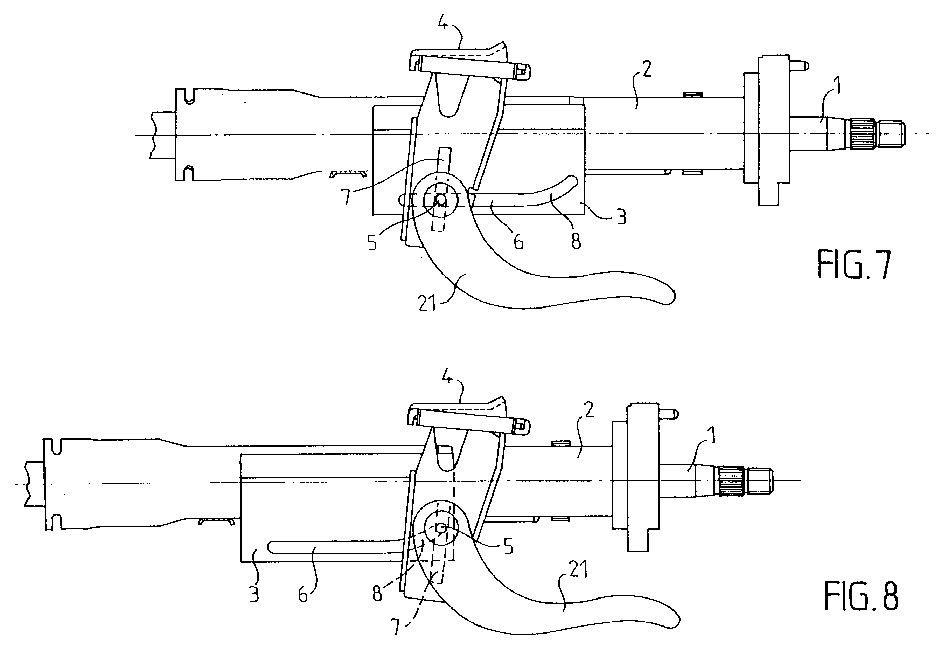

La figure 7 représente l'ensemble d'une colonne de direction lorsque l'effort sur le volant est à des valeurs normales, tandis que la figure 8 représente l'ensemble de la colonne de direction selon l'invention après la rétraction qui s'est exercée lors d'un choc.

Ainsi, lorsque les goupilles fusibles 10 sont cisaillées, la colonne a toute liberté pour se déplacer suivant la direction de réglage en profondeur comme cela est représenté sur la figure 8, et en particulier lorsque le véhicule décélère brutalement lors d'un choc. De plus, la fonction de butée de réglage en profondeur se fait soit en fonction de la position de la poignée de manoeuvre 21, soit sur la partie de la crémaillère 13 qui comporte la butée 20.

## Revendications

1. Dispositif de rétraction actif, lors d'un choc, d'une colonne de direction de véhicule automobile comportant un arbre de direction (1) monté dans un tube-corps (2) à l'aide de roulements (9), un carré de renfort (3) solidaire dudit tube-corps étant monté sur un élément support (4) fixé au châssis du véhicule et bloqué à la position voulue par un système de réglage (5), caractérisé en ce que ledit dispositif de rétraction actif comprend deux cales à pente (11 et 12) montées sur un axe du système de réglage (5), lesdites cales à pente (11 et 12) ayant des inclinaisons conjuguées par rapport à l'axe du système de réglage (5) et étant raccordées par au moins une goupille fusible (10), la cale interne à pente (11) étant agencée autour d'une glissière de réglage en profondeur (6) et la cale externe à pente (12) étant solidaire de l'axe du système de réglage (5) ; de manière qu'en cas de choc, la goupille fusible (10) soit cisaillée par le déclenchement d'un air-bag et permette aux cales (11 et 12) à pente de s'écarter l'une de l'autre et de supprimer la tension de l'axe du système de réglage (5) afin d'autoriser l'arbre de direction à se déplacer dans la direction demandée.

2. Dispositif de rétraction actif selon la revendication 1, caractérisé en ce qu'il comporte un système à crémaillère de maintien en position du réglage en profondeur.

3. Dispositif de rétraction actif selon la revendication 2, caractérisé en ce que le système à crémaillère est constitué par une crémaillère (13) du tube-corps (2) et agencée autour de la glissière de réglage en profondeur (6), et une crémaillère (14) solidaire de la cale interne à pente (11) et coopérant avec la crémaillère (13) solidarisée au carré de renfort (3).

4. Dispositif de rétraction actif selon la revendication 3, caractérisé en ce que :
- la crémaillère (13) du carré de renfort (3) comporte une glissière de réglage en profondeur débouchante (130) et deux portions de crémaillère (131, 132) entourant ladite glissière (130), et
- la cale interne (11) comporte une glissière de réglage en profondeur débouchante (110) et deux portions de crémaillère (111, 112) entourant ladite glissière (110).

5. Dispositif de rétraction actif selon l'une quelconque des revendications précédentes, caractérisé en ce qu'il comporte un croisillon (17) monté sur l'axe du système de réglage (5), ledit croisillon (17) étant muni sur l'une de ses faces d'un tenon interne (18) coulissant dans la glissière de réglage en profondeur (6) et sur l'autre face d'un tenon externe (19) coulissant dans la glissière de réglage en hauteur (7).

6. Dispositif de rétraction actif selon la revendication 4, caractérisé en ce que la crémaillère (13) du carré de renfort (3) comporte une butée (20) fixée à son extrémité.

7. Dispositif de rétraction actif selon la revendication 4, caractérisé en ce que l'axe du système de réglage (5) est constitué par une vis (15) montée de part en part à travers le carré de renfort (3) ; une came (16) bloquant le système de réglage (5) au moyen d'une poignée (21) est disposée à l'extérieur de l'élément support (4) ; et la crémaillère de carré de renfort (13), la cale interne à pente (11) et la cale externe à pente (12) solidaire de la vis (15) sont fixées à l'extérieur dudit carré de renfort (3).

8. Dispositif de rétraction actif selon la revendication 5 lorsqu'elle dépend de la revendication 3, caractérisé en ce que l'axe du système de réglage est constitué par une vis (15) montée sur une paroi du carré de renfort (3) ; une came (16) bloquant le système de réglage (5) au moyen d'une poignée (21) est disposée à l'extérieur de l'élément support (4) ; le croisillon (17) est disposé entre l'élément support (4) et le carré de renfort (3) ; et la crémaillère (13) fixée au carré de renfort (3), la cale interne à pente (11), et la cale externe à pente (12) solidaire de la vis (15) sont fixées à l'intérieur dudit carré de renfort (3).

## Claims

1. Device for active retraction of an automobile vehicle steering column in the event of an impact, comprising a steering shaft (1) mounted in a tube-body (2) through bearing means (9), a reinforcing square (3) attached to said tube-body being mounted on a support member (4) fixed to the chassis of the vehicle and locked in the required position by an adjustment system (5), characterized in that said active retraction device comprises two sloping wedges (11 and 12) mounted on an axle of the adjustment system (5), said sloping wedges (11 and 12) having conjugate inclinations relative to the axle of the adjustment system (5) and being coupled by at least one fusible pin (10), the inside wedge (11) being disposed around a depthwise adjustment slide (6) and the outside sloping wedge (12) being attached to the axle of the adjustment system (5) ; so that in the event of an impact the fusible pin (10) is sheared by the triggering of an air-bag and allows the wedges (11 and 12) to move apart and to release the tension in the axle of the adjustment system (5) in order to allow the steering shaft to move in the predetermined direction.

2. Active retraction device according to claim 1, characterized in that it includes a rack system for maintaining a depthwise adjustment.

3. Active retraction device according to claim 2, characterized in that the rack system is constituted by a rack (13) of the tube-body (2) and disposed around the depthwise adjustment slide (6), and a rack (14) attached to the inside sloping wedge (11) and cooperating with the rack (13) attached to the reinforcing member (3).

4. Active retraction device according to claim 3, characterized in that :
- the rack (13) of the reinforcing square (3) includes a open-ended depthwise adjustment slide (130) and two rack portions (131, 132) surrounding said slide (130), and
- the inside wedge (11) includes a open-ended depthwise adjustment slide (110) and two rack portions (111, 112) surrounding said slide (110).

5. Active retraction device according to any one of preceding claims, characterized in that it includes a cross (17) mounted on the axle of the adjustment system (5), said cross (17) being provided on one face with an inside tenon (18) sliding in the depthwise adjustment slide (6) and on another face with an outside tenon (19) sliding in the heightwise adjustment slide (7).

6. Active retraction device according to claim 4, characterized in that the rack (13) of the reinforcing member (3) includes an abutment (20) fixed to its end.

7. Active retraction device according to claim 4, characterized in that the axle of the adjustment system (5) is constituted by a screw (15) passing through the reinforcing square (3) ; a cam (16) locking the adjustment system (5) by means of a handle (21) is disposed outside the support member (4) ; and the reinforcing square rack (13), the inside sloping wedge (11) and the outside sloping wedge (12) attached to the screw (15) are disposed outside said reinforcing square (3).

8. Active retraction device according to claim 5 when it depends on claim 3, characterized in that the axle of the adjustment system is constituted by a screw (15) mounted in a wall of the reinforcing square (3) ; a cam (16) blocking the adjustment system (5) by means of a handle (21) is disposed outside the support member (4) ; the cross (17) is disposed between the support member (4) and the reinforcing member (3) ; and the rack (13) fixed to the reinforcing square (3), the inside sloping wedge (11), and the outside sloping wedge (12) attached to the screw (15) are disposed inside said reinforcing square (3).

## Patentansprüche

1. Bei einem Stoß aktive Rückzugsvorrichtung einer Kraftfahrzeug-Lenksäule, die eine Lenkwelle (1) enthält, die in einem Rohrkörper (2) mit Hilfe von Wälzlagern (9) montiert ist, wobei ein Verstärkungsvierkant (3), der mit dem genannten Rohrkörper fest verbunden ist, auf einem Trägerteil (4) angebracht ist, das am Chassis des Wagens befestigt und in der gewünschten Stellung durch ein Einstellsystem (5) arretiert ist, dadurch gekennzeichnet, dass die genannte aktive Rückzugsvorrichtung zwei Keile (11 und 12) umfasst, die auf einer Achse des Einstellsystems (5) montiert sind, wobei die genannten Keile (11 und 12) gekoppelte Neigungen relativ zur Achse des Einstellsystems (5) aufweisen und durch mindestens einen schmelzbaren Stift (10) verbunden sind, wobei der innere Keil (11) um eine Gleitführung zur Tiefeneinstellung (6) angeordnet ist und der äußere Keil (12) mit der Achse des Einstellsystems (5) fest verbunden ist, derart, dass der schmelzbare Stift (10) im Fall eines Stoßes durch die Auslösung eines Airbag durchgetrennt wird und den Keilen (11 und 12) ermöglicht, sich voneinander zu trennen und die Spannung der Achse des Einstellsystems (5) zu lösen, um der Lenkwelle zu erlauben, sich in der verlangten Richtung zu verschieben.

2. Aktive Rückzugsvorrichtung nach Patentanspruch 1, dadurch gekennzeichnet, dass sie ein Zahnstangensystem zum Halten der Tiefeneinstellung aufweist.

3. Aktive Rückzugsvorrichtung nach Patentanspruch 2, dadurch gekennzeichnet, dass das Zahnstangensystem aus einer Zahnstange (13) des Rohrkörpers (2) besteht, die um die Gleitführung zur Tiefeneinstellung (6) angeordnet ist, und einer Zahnstange (14), die mit dem inneren Keil (11) fest verbunden ist und mit der Zahnstange (13) zusammenarbeitet, die mit dem Verstärkungsvierkant (31 fest verbunden ist.

4. Aktive Rückzugsvorrichtung nach Patentanspruch 3, dadurch gekennzeichnet, dass:
- die Zahnstange (13) des Verstärkungsvierkants (3) eine ausmündende Gleitführung zur Tiefeneinstellung (130) umfasst und zwei Zahnstangenabschnitte (131, 132), die die genannte Gleitführung (130) umgeben, und
- der innere Keil (11) eine ausmündende Gleitführung zur Tiefeneinstellung (110) aufweist und zwei Zahnstangenabschnitte (111, 112), die die genannte Gleitführung (110) umgeben.

5. Aktive Rückzugsvorrichtung nach irgendeinem der vorangehenden Patentansprüche, dadurch gekennzeichnet, dass sie ein Kreuzstück (17) umfasst, das auf der Achse des Einstellsystems (5) montiert ist, wobei das genannte Kreuzstück (17) auf einer seiner Seiten mit einem inneren Zapfen (181 versehen ist, der in der Gleitführung zur Tiefeneinstellung (6) gleitet, und auf der anderen Seite mit einem äußeren Zapfen (19), der in der Gleitführung zur Höheneinstellung (7) gleitet.

6. Aktive Rückzugsvorrichtung nach Patentanspruch 4, dadurch gekennzeichnet, dass die Zahnstange (13) des Verstärkungsvierkants (3) einen Anschlag (20) aufweist, der an seinem Ende befestigt ist.

7. Aktive Rückzugsvorrichtung nach Patentanspruch 4, dadurch gekennzeichnet, dass die Achse des Einstellsystems (5) aus einer Schraube (15) besteht, die den Verstärkungsvierkant (3) ganz durchquert, eine Nocke (16), die das Einstellsystem (5) mit Hilfe eines Griffes (21) blockiert, außerhalb des Trägerteils (4) angebracht ist und die Zahnstange des Verstärkungsvierkants (13), der innere Keil (11) und der äußere, mit der Schraube (15) fest verbundene Keil (12) außerhalb des genannten Verstärkungsvierkants (3) befestigt sind.

8. Aktive Rückzugsvorrichtung nach Patentanspruch 5, wenn er von Patentanspruch 3 abhängt, dadurch gekennzeichnet, dass die Achse des Einstellsystems aus einer Schraube (15) besteht, die auf einer Wand des Verstärkungsvierkants (3) montiert ist, eine Nocke (16), die das Einstellsystem (5) mit Hilfe eines Griffes (21) arretiert, außerhalb des Trägerteils (4) angebracht ist, das Kreuzstück (17) zwischen dem Trägerteil (4) und dem Verstärkungsvierkant (3) angeordnet ist und die am Verstärkungsvierkant (3) befestigte Zahnstange (13), der innere Keil (11) und der äußere, mit der Schraube (15) fest verbundene Keil (12) innerhalb des genannten Verstärkungsvierkants (3) befestigt sind.
